# EUROPEAN PATENT APPLICATION

(11) **EP 2 085 911 A1**
(43) Date of publication of application: **05.08.2009**
(21) Application number: 09151029.7
(22) Date of filing: 21.01.2009
(51) Int. Cl.: G06K 15/16, B41J 11/00

(54) **Image forming device, printing medium supplying method, and computer-readable recording medium**

(30) Priority: 29.01.2008 JP 2008017962; 08.12.2008 JP 2008312615
(71) Applicant: Ricoh Company, Ltd., Ohta-ku Tokyo 143-8555 (JP)
(72) Inventor: Masui, Daisuke, Kanagawa (JP); Shindo, Nobuhiro, Tokyo (JP); Matsumoto, Yutaka, Saitama (JP); Saito, Yuka, Kanagawa (JP)
(74) Representative: Schwabe - Sandmair - Marx

(57) **Abstract**

In an image forming device including a control unit to control the image forming device to perform a job of image formation, the control unit is arranged so that, when a size of a printing medium detected by a detection unit is not in agreement with a printing medium size indicated by information contained in a printing request, the control unit causes the printing medium to be ejected from the image forming device without causing an image formation unit to form an image on the printing medium, and causes an image holding unit to hold data of the image.

## Description

### BACKGROUND OF THE INVENTION

### 1. Field of the Invention

This invention relates to an image forming device, a printing medium supplying method, and a computer-readable recording medium.

### 2. Description of the Related Art

Conventionally, there is an image forming device which is adapted to automatically supply a recording sheet or printing medium from a manual feeding tray when the printer runs out of paper in a paper cassette, in order to save the time and efforts of an operator.

For example, Japanese Laid-Open Patent Application No. 2006-224379 discloses a printing system which is adapted to supply a recording sheet from a manual feeding inlet when a manual feeding request is input by a user on the occasion of a paper-out state of a paper cassette, or a printing system which is set up beforehand to supply a recording sheet from a manual feeding inlet when a paper-out state of a paper cassette takes place.

There is also a function of a printing system, called "automatic tray selection", that automatically selects, in response to a print data request received from a host computer, one paper cassette among a plurality of paper cassettes and a manual feeding tray in the printing system, and the selected cassette being arranged to supply a recording sheet of an attribute in agreement with the recording sheet attribute indicated by the information contained in the print data, so that a recording sheet of the correct attribute can be supplied from the selected cassette.

However, the printing system of Japanese Laid-Open Patent Application No. 2006-224379 is arranged to perform the supplying of a recording sheet from the manual feeding tray when the manual feeding request is input by the user, or when the function of automatic tray selection of the printing system is set up beforehand, even if a recording sheet of a different kind is contained in the manual feeding tray.

Usually, the manual feeding tray is provided to supply a recording sheet of such a kind that is not used frequently, unlike other paper cassettes, and there are many cases in which the image forming device does not hold information indicating the attribute of a recording sheet contained in the manual feeding tray.

A mismatch between the recording sheet size indicated by the information contained in the print data and the size of the recording sheet actually supplied from the manual feeding tray would cause a problem of the printing system, such as a paper jam, to take place during the process of image formation. Moreover, if the job of image formation is started in such a case, the image data that is generated based on the print data would not be saved and it would be discarded due to the problem. For this reason, even when a recording sheet of the correct size is subsequently supplied, performing a recovery printing in such a case is impossible. In order to print the image on the recording sheet, the operator has to retransmit the print data to the printing system, and this is inconvenient for the operator.

### SUMMARY OF THE INVENTION

In one aspect of the invention, the present disclosure provides an improved image forming device and printing medium supplying method in which the above-described problems are eliminated.

In one aspect of the invention, the present disclosure provides an image forming device which is able to continuously hold the image data until the job of image formation when a printing medium is supplied from a manual feeding tray is completed normally, so that a recovery printing can be performed.

In an embodiment of the invention which solves or reduces one or more of the above-mentioned problems, the present disclosure provides an image forming device comprising: a detection unit to detect a size of a printing medium supplied from a first medium supplying unit; an image generating unit to generate data of an image to be formed on the printing medium, in response to a printing request; an image formation unit to form an image on the printing medium based on the data of the image generated by the image generating unit; an image holding unit to hold the data of the image; and a control unit to control the image forming device to perform a job of image formation; wherein the control unit is arranged so that, when the size of the printing medium detected by the detection unit is not in agreement with a printing medium size indicated by information contained in the printing request, the control unit causes the printing medium to be ejected from the image forming device without causing the image formation unit to form an image on the printing medium, and causes the image holding unit to hold the data of the image.

In an embodiment of the invention which solves or reduces one or more of the above-mentioned problems, the present disclosure provides a printing medium supplying method for use in an image forming device, the printing medium supplying method comprising: detecting a size of a printing medium supplied from a first medium supplying unit; generating data of an image to be formed on the printing medium, in response to a printing request; holding the data of the image in an image holding unit; forming an image on the printing medium based on the data of the image; and controlling the image forming device to perform a job of image formation; wherein the controlling the image forming device is arranged so that, when the detected size of the printing medium is not in agreement with a printing medium size indicated by information contained in the printing request, the printing medium is ejected from the image forming device without forming an image on the printing medium, and the data of the image is held in the image holding unit.

### BRIEF DESCRIPTION OF THE DRAWINGS

FIG. 1 is a block diagram showing the composition of a network system in which an image forming device of an embodiment of the invention is arranged.
FIG. 2 is a block diagram showing the hardware composition of a controller of an image forming device of an embodiment of the invention.
FIG. 3 is a block diagram showing the software composition of a program which performs the processing in an image forming device of an embodiment of the invention.
FIG. 4 is a block diagram showing the functional composition of an image forming device of an embodiment of the invention.
FIG. 5 is a flowchart for explaining the processing steps which cause a recording sheet to be supplied from a manual feeding tray at a predetermined timing.
FIG. 6 is a flowchart for explaining the processing steps in which printing is restarted when a recording sheet of the manual feeding tray is exchanged.
FIG. 7 is a flowchart for explaining the processing steps in which printing is restarted after information indicating that a recording sheet of the manual feeding tray is exchanged is input by the operator.
FIG. 8 is a flowchart for explaining the processing steps in which printing is restarted after a predetermined time has elapsed.
FIG. 9 is a diagram showing an example of a menu which includes options for setting up the timing to restart the job of image formation.
FIG. 10 is a diagram showing an example of a screen reporting that the size of a recording sheet detected by the detection unit and the size of a recording sheet indicated by information of the printing conditions are not in agreement.
FIG. 11 is a flowchart for explaining the processing steps which select either the process in which recovery printing is performed or the process in which printing of the next page is performed without performing recovery printing.
FIG. 12 is a flowchart for explaining the processing steps which hold the information indicating an attribute of a recording sheet previously supplied from the manual feeding tray.
FIG. 13 is a block diagram showing the composition of a computer of an image forming device which is arranged to perform a printing medium supplying method of an embodiment of the invention.

### DETAILED DESCRIPTION OF THE PREFERRED EMBODIMENTS

An image forming device of an embodiment of the invention includes: a detection unit to detect a size of a printing medium supplied from a first medium supplying unit; an image generating unit to generate data of an image to be formed on the printing medium, in response to a printing request; an image formation unit to form an image on the printing medium based on the data of the image generated by the image generating unit; an image holding unit to hold the data of the image; and a control unit to control the image forming device to perform a job of image formation; wherein the control unit is arranged so that, when the size of the printing medium detected by the detection unit is not in agreement with a printing medium size indicated by information contained in the printing request, the control unit causes the printing medium to be ejected from the image forming device without causing the image formation unit to form an image on the printing medium, and causes the image holding unit to hold the data of the image.

The above-mentioned image forming device may be configured so that the control unit is arranged to delete the data of the image held by the image holding unit, after the image is formed on the printing medium by the image formation unit.

The above-mentioned image forming device may be configured to further include a medium supplying source selecting unit to select, in response to the printing request, one of a plurality of second medium supplying units that supplies a printing medium of an attribute indicated by information contained in the printing request, and to cause the selected second medium supplying unit to supply the printing medium, wherein the medium supplying source selecting unit is arranged so that, when all of the plurality of second medium supplying units are not to supply a printing medium of the attribute indicated by the information contained in the printing request, the medium supplying source selecting unit selects the first medium supplying unit and causes a printing medium to be supplied from the first medium supplying unit.

The above-mentioned image forming device may be configured so that the control unit is arranged so that, when the size of the printing medium detected by the detection unit is not in agreement with the printing medium size indicated by the information contained in the printing request and a new printing medium is set in the first medium supplying unit, the control unit starts the job of image formation to form an image on the new printing medium.

The above-mentioned image forming device may be configured so that the control unit is arranged so that, when the size of the printing medium detected by the detection unit is not in agreement with the printing medium size indicated by the information contained in the printing request and a predetermined time has elapsed after the printing medium is ejected without causing the image formation unit to form an image on the printing medium, the control unit starts the job of image formation to form an image on a printing medium.

The above-mentioned image forming device may be configured to further include an input unit to input medium renewal information indicating that a new printing medium is set in the first medium supplying unit, wherein the control unit is arranged so that, when the size of the printing medium detected by the detection unit is not in agreement with the printing medium size indicated by the information contained in the printing request and the medium renewal information is input by the input unit, the control unit starts the job of image formation to form an image on the new printing medium.

The above-mentioned image forming device may be configured to further include a screen generating unit to generate a message display screen reporting that the detected size of the printing medium is not in agreement with the printing medium size indicated by the printing request, when the size of the printing medium detected by the detection unit is not in agreement with the printing medium size indicated by the information contained in the printing request.

The above-mentioned image forming device may be configured so that the screen generating unit is arranged to generate a stop request display screen requesting an operator to input a command for stopping the job of image formation started by the printing request, when the size of the printing medium detected by the detection unit is not in agreement with the printing medium size indicated by the information contained in the printing request.

The above-mentioned image forming device may be configured so that the first medium supplying unit includes a width detection unit to detect a width of a printing medium set in the first medium supplying unit, and, when the detected width of the printing medium set in the first medium supplying unit is in agreement with the printing medium size indicated by the information contained in the printing request, the control unit starts the job of image formation to form an image on the printing medium.

The above-mentioned image forming device may be configured to further include a medium attribute input unit to input an attribute of a printing medium that is set in the first medium supplying unit, wherein the control unit is arranged so that, when the printing medium attribute input by the medium attribute input unit is in agreement with the printing medium attribute indicated by the information contained in the printing request, the control unit starts the job of image formation to form an image on the printing medium.

The above-mentioned image forming device may be configured to further include an information holding unit to hold medium size flag information indicating whether the size of the printing medium detected by the detection unit is in agreement with the printing medium size indicated by the information contained in the printing request.

A printing medium supplying method for use in an image forming device of an embodiment of the invention includes: detecting a size of a printing medium supplied from a first medium supplying unit; generating data of an image to be formed on the printing medium, in response to a printing request; holding the data of the image in an image holding unit; forming an image on the printing medium based on the data of the image; and controlling the image forming device to perform a job of image formation; wherein the controlling the image forming device is arranged so that, when the detected size of the printing medium is not in agreement with a printing medium size indicated by information contained in the printing request, the printing medium is ejected from the image forming device without forming an image on the printing medium, and the data of the image is held in the image holding unit.

The above-mentioned printing medium supplying method may be configured to further include deleting the data of the image held in the image holding unit, after the image is formed on the printing medium.

The above-mentioned printing medium supplying method may be configured to further include selecting, in response to the printing request, one of a plurality of second medium supplying units that supplies a printing medium of an attribute indicated by information contained in the printing request, to cause the selected second medium supplying unit to supply the printing medium, wherein the selecting is arranged so that, when all of the plurality of second medium supplying units are not to supply a printing medium of the attribute indicated by the information contained in the printing request, the first medium supplying unit is selected to cause a printing medium to be supplied from the first medium supplying unit.

In the image forming device and the printing medium supplying method of the embodiments of the invention, it is possible to continuously hold the image data until the job of image formation when a printing medium is supplied from a manual feeding tray is completed normally, so that a recovery printing is performed.

Other objects, features and advantages of the invention will be more apparent from the following detailed description when read in conjunction with the accompanying drawings.

A description will be given of embodiments of the invention with reference to the accompanying drawings.

In the following, a "printing medium" on which an image is formed is also referred to as "recording sheet". A "printing request" which is a request for forming an image which request is input to an image forming device is also referred to as "print data". A job of image formation is also referred to as "printing". Image data which is used print an image is also referred to as "printing image".

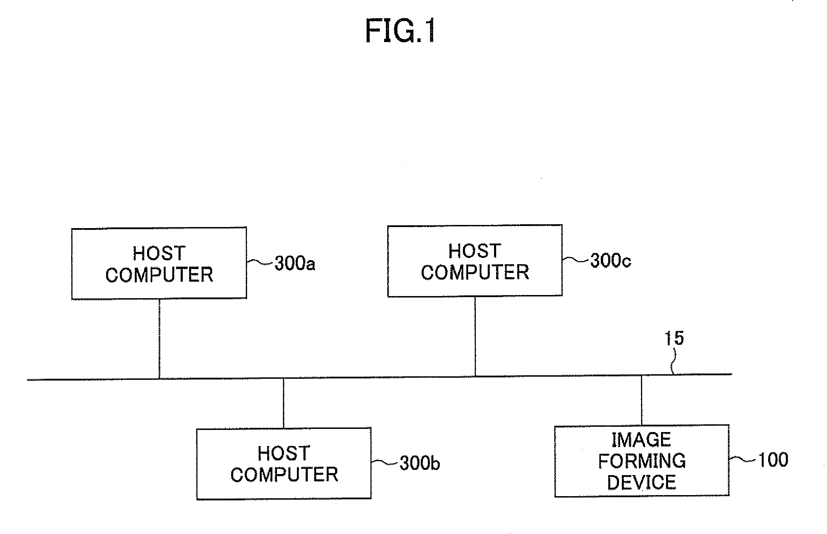

FIG. 1 shows the composition of a network system in which an image forming device 100 of an embodiment of the invention is arranged.

In the network system of FIG. 1, the image forming device 100 is connected to host computers 300a, 300b and 300c via a network 15.

In the example shown in FIG. 1, the image forming device 100 is connected through the network 15 to the host computers 300a to 300c. Alternatively, the network system may be arranged so that the image forming device 100 is connected directly to a host computer 300.

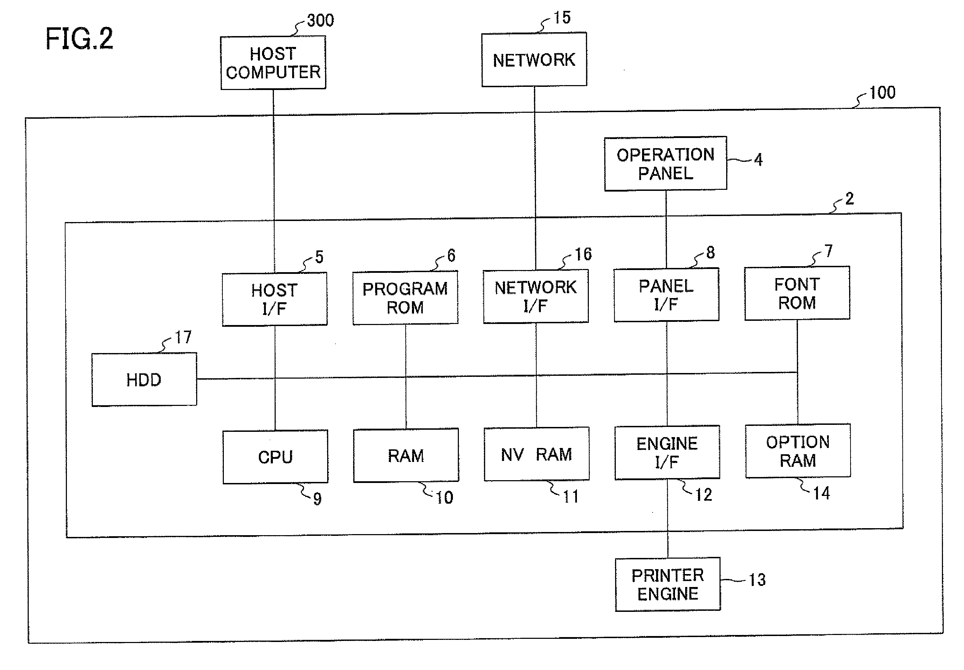

FIG. 2 shows the hardware composition of an image forming device 100 of an embodiment of the invention.

As shown in FIG. 2, the image forming device 100 includes a controller 2, an operation panel 4, and a printer engine 13. The controller 2 is connected directly to the host computer 300. The controller 2 may be connected to other host computers via the network 15.

The controller 2 converts print data into image data in accordance with the control code from the host computer 300 (or from the host computer 300 connected via the network 15) or in accordance with the currently selected control mode, and outputs the image data to the printer engine 13.

For example, the controller 2 includes a host interface 5, a program ROM 6, a font ROM 7, a panel interface 8, a CPU 9, a RAM 10, a NVRAM 11, an engine interface 12, an option RAM 14, a network interface 16, and a HDD 17.

The host interface 5 is an interface of a control signal and image data sent from the host computer 300 to the image forming device 1, and an interface of a state signal sent from the image forming device 100 to the host computer 300.

The program ROM 6 is a memory unit in which a computer-readable program executed by the CPU 9 is stored. The font ROM 7 is a memory unit in which the fonts of various kinds used for printing are stored. The panel interface 8 is an interface between the controller 2 and the operation panel 4.

The CPU 9 performs processing of print data and control data received from the host computer 300, by executing the computer-readable program stored in the program ROM 6. The RAM 10 is a work memory which is used during the processing of the CPU 9. The RAM 10 may be arranged as a bit map memory in which print data received from the host computer 300 are stored on a page-by-page basis, and in which image data generated through converting of the print data are stored. The NVRAM 11 is a nonvolatile RAM. The NVRAM 11 is arranged to store data which should be retained even when the power of the image forming device 100 is turned off.

The engine interface 12 is an interface which allows a control signal and image data to be transmitted from the controller 2 to the printer engine 13, and it is also an interface which allows a state signal of the printer engine 13 to be transmitted from the printer engine 13 to the controller 2. The option RAM 14 is provided a supplementary RAM.

The network interface 16 is an interface which allows a control signal and print data to be transmitted from a computer (which is connected to the image forming device 100 via the network 15) to the image forming device 100, and it is also an interface which allows a state signal of the image forming device 100 to be transmitted from the image forming device 100 to the computer via the network 15.

The HDD 17 is a storage device which stores mass data. For example, the HDD 17 may store document data including print data received from the host computer 300. This may provide the image forming device 100 with the stored-document printing function that subsequently performs a printing job of the stored document data.

The operation panel 4 includes a display unit which displays a state of the image forming device 100, and an input unit which inputs a command to the image forming device 100. The printer engine 13 is arranged to form an image on a recording sheet (or printing medium) based on the image data and the control signal which are received from the controller 2. Specifically, the printer engine 13 is arranged so that an electrostatic latent image formed on a photoconductor is developed and the image from the photoconductor is transferred and fixed to a recording sheet which is supplied from a sheet feeding unit.

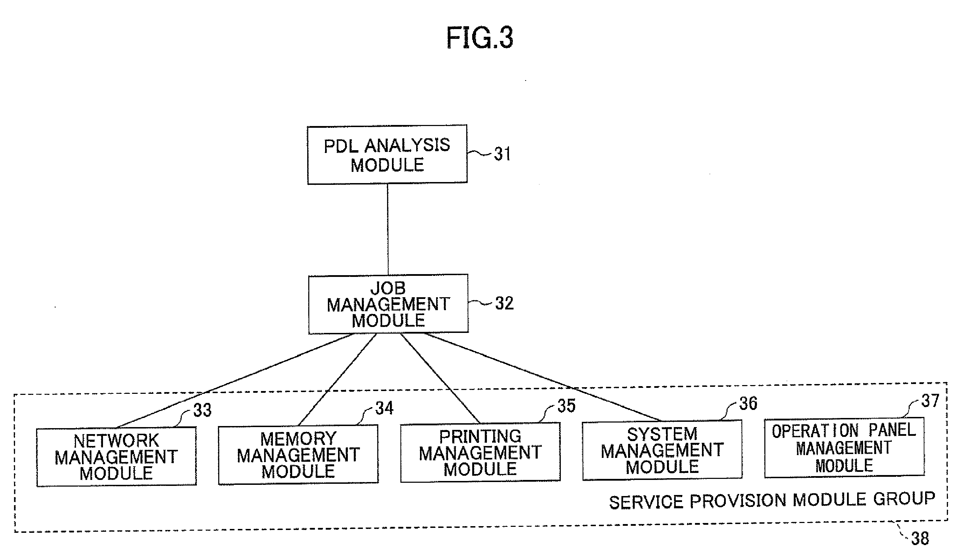

FIG. 3 shows the composition of a program which performs the processing in the image forming device of this embodiment.

As shown in FIG. 3, the program of the image forming device 100 includes a PDL (Page Description Language) analysis module 31, a job management module 32, and a service provision module group 38.

The plurality of modules included in the service provision module group 38 communicate with each other and share the basic operation of the image forming device 100. Two or more of the plurality of modules perform the processing requested by the upper layer module in association with each other. For example, the service provision module group 38 includes a network management module 33, a memory management module 34, a printing management module 35, a system management module 36, and an operation panel management module 37.

The network management module 33 is a module which manages a network controller and controls the processing of acquiring the receiving data from the network controller. The network management module 33 manages the communications protocols (for example, ftp (file transfer protocol) or lpr (line printing utility)), indispensably used at the time of receiving the data from the host computer, acquires the receiving data from the network controller, and delivers the receiving data to other modules.

The memory management module 34 is a module which manages the memories and external storages. The memory management module 34 performs assigning and releasing of the storage areas of the memories and external storages in response to a request received from another module.

The printing management module 35 is a module which manages a printing job of a printing image which is generated by the PDL analysis module 31. The printing management module 35 performs various processing needed for causing the printer engine 13 to print the printing images stored in the memories and the external storages managed by the memory management module 34. The printing management module 35 performs forwarding of sheet feeding and sheet ejecting commands, forwarding of a post-processing execution request, detecting of printing related error conditions, and forwarding of an error message to another module.

The system management module 36 is a module which manages and controls the device configuration information and device state of the image forming device 100. The device configuration information includes information indicating attachment or detachment of the sheet feeding tray or the sheet output tray, and information indicating the size or kind of recording sheets in the sheet feeding tray. The device state includes information indicating a state of the image forming device 100 including printing state, waiting state, error states, such as a paper jam, a paper out, etc. The system management module 36 notifies the device configuration information and the device state to another module, and manages the device setting items input by the user (the items which are customizable to change the operation by the setting).

The operation panel management module 37 is a module which manages the displaying of the operation panel and manages the operation input by the user on the operation panel. In response to a request received from another module, the operation panel management module 37 displays the state of the image forming device 100, and performs the displaying of a menu screen for changing the device setting items managed by the system management module 36, and the displaying of an error message display screen for urging the user to perform an appropriate action for eliminating the error.

When the indication of a button is included in the menu screen or the error message display screen, the operation panel management module 37 recognizes the button being pressed by the user and notifies the request input by the user to another module.

The PDL analysis module 31 is a module which analyzes PDL data received by the image forming device 100 and generates a printing image based on the analyzing result of the PDL data. The PDL analysis module 31 receives PDL data from the network management module 33 by using an agent function of the job management module 32.

Moreover, the PDL analysis module 31 generates a printing image in the memory area secured by the memory management module 34 by using the agent function of the job management module 32. The PDL analysis module 31 acquires the device configuration information needed at the time of generating the printing image (or, the information indicating attachment or detachment of the sheet feeding tray or the sheet output tray and information indicating the size or kind of recording sheets in the sheet feeding tray) from the system management module 36 by using the agent function of the job management module 32.

The job management module 32 serves as an agent module which performs the agent function which controls the whole PDL processing and requests other modules to perform the processing which is needed by the PDL analysis module 31. The agent functions performed by the job management module 32 may include the following functions:
(1) the agent function of delivering the PDL data which is received by the network management module 33 to the PDL analysis module 31.
(2) the agent function of enabling the PDL analysis module 31 to acquire the device information which is managed by the system management module 36.
(3) the agent function of enabling the PDL analysis module 31 to secure the memory area which is managed by the memory management module 34.
(4) the agent function of enabling the PDL analysis module 31 to output a printing request to the printing management module 35 in order to perform the printing of a printing image generated by the PDL analysis module 31.

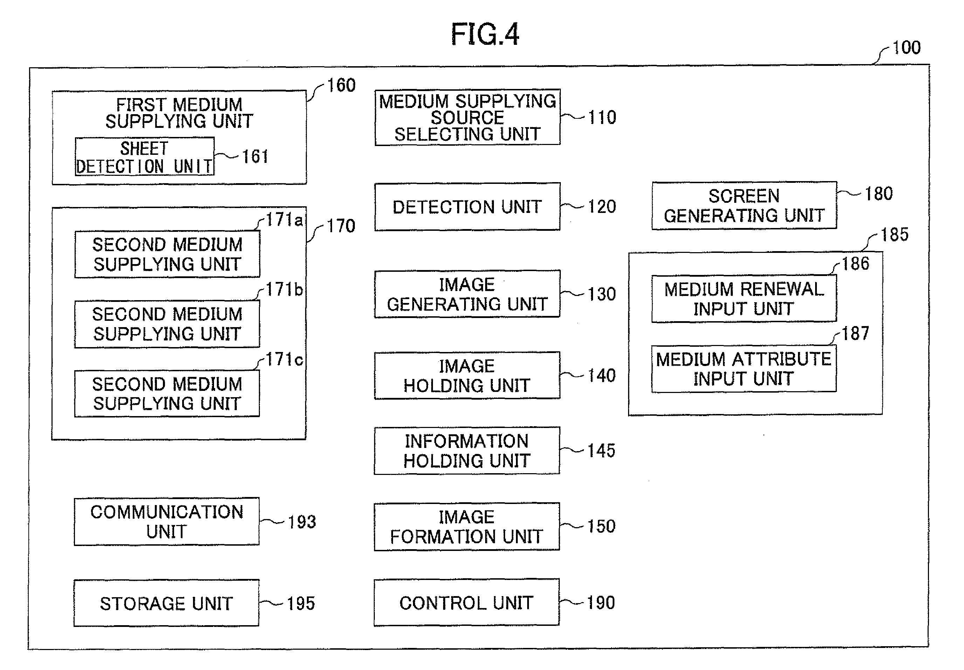

FIG. 4 shows the functional composition of an image forming device of an embodiment of the invention.

As shown in FIG. 4, the image forming device 100 of this embodiment includes a medium supplying source selecting unit 110, a detection unit 120, an image generating unit 130, an image holding unit 140, an information holding unit 145, an image formation unit 150, a control unit 190, a communication unit 193, a storage unit 195, a screen generating unit 180, an input unit 185, a first medium supplying unit 160, and a medium supplying unit 170.

For example, the first medium supplying unit 160 may be constituted as a manual feeding tray which is arranged to supply a less frequently used recording sheet. The first medium supplying unit 160 includes a sheet detection unit 161. This sheet detection unit 161 detects whether a recording sheet is set in the first medium supplying unit 160, or whether a recording sheet is newly set in the first medium supplying unit 160.

The sheet detection unit 161 may be arranged to acquire the attribute of a recording sheet set in the first feeding unit 160. The attribute of the recording sheet detected by the sheet detection unit 161 is, for example, the width of a recording sheet. The width of a recording sheet is the length of the recording sheet in a direction perpendicular to the transport direction of the recording sheet.

Specifically, the width of a recording sheet set in the manual feeding tray can be sensed by the sensor (the sheet detection unit 161) which is attached to the base of the manual feeding tray. The length of a recording sheet (including A4 size and letter size of a recording sheet) can be detected by the sensor attached to the guide (or the extension stand for placing a long recording sheet horizontally) of the manual feeding tray. The length of a recording sheet that is detectable using the sensors of the manual feeding tray is up to A4 size or letter size. A recording sheet having a length exceeding the length of the manual feeding tray can be placed on the manual feeding tray. However, there is no sensor in the portion exceeding the length of the manual feeding tray, and the length of the recording sheet that is detectable is limited.

The medium supplying unit 170 includes a plurality of second medium supplying units 171a, 171b, 171c. These second medium supplying units 171a-171b may be constituted as a plurality of recording sheet cassettes, each of which is arranged to supply a more frequently used recording sheet. Each second medium supplying unit 171 may be arranged to include a guide for inputting information indicating the size of recording sheets in the recording sheet cassette. The attributes of recording sheets in the plurality of second medium supplying units 171a-171c may be managed such that the information indicating the attribute of recording sheets in each second medium supplying unit 171 is input by the input unit 185, and the corresponding information indicating the attributes of recording sheets in the respective second medium supplying units 171 is stored the storage unit 195 for each second medium supplying unit 171.

The medium supplying source selecting unit 110 is arranged to select one second medium supplying unit 171 from among the plurality of second medium supplying units 171 included in the medium supplying unit 170, which is arranged to supply the recording sheet of the attribute in agreement with the recording sheet attribute contained in the printing request. Moreover, the medium supplying source selecting unit 110 is arranged to select the first medium supplying unit 160 for supplying a recording sheet therefrom, when none of the plurality of second medium supplying units 171 supplies the recording sheet of the attribute in agreement with that contained in the printing request. The second function of the medium supplying source selecting unit 110 is equivalent to the known automatic tray selection.

The detection unit 120 detects the size of a recording sheet actually supplied from the first medium supplying unit 160. For example, the size of the recording sheet detected by the detection unit 120 may be the length of the recording sheet in a direction parallel to the transport direction of the recording sheet, or may include the length of the recording sheet in the direction parallel to the transport direction of the recording sheet and the width of the recording sheet in the direction perpendicular to the transport direction of the recording sheet.

Specifically, the length and the width of a recording sheet actually supplied from the manual feeding tray are detectable by the sensors disposed in the transporting route inside the main body of the image forming device 100. For example, the length of a recording sheet can be detected based on the result of measurement of a time for the end of the recording sheet to pass through two points along a predetermined transporting route.

In response to a printing request received by the communication unit 193, the image generating unit 130 develops an image corresponding to the printing request on the image holding unit 140. For example, the printing request is described in a format of page description language PDL. The image generating unit 130 analyzes the acquired PDL and performs the rendering of an image based on the image information contained in the PDL.

The image holding unit 140 is constituted as a memory and holds the data of an image generated by the image generating unit 130. Moreover, the image holding unit 140 may be arranged to hold the image data contained in the PDL.

The information holding unit 145 is constituted to hold medium size flag information indicating whether the size of the recording sheet detected by the detection unit 120 is in agreement with the recording sheet attribute indicated by the information contained in the printing request. This medium size flag information is managed by the control unit 190. For example, when it is detected that no recording sheet is set in the first medium supplying unit 110, the medium size flag information held by the information holding unit 145 is updated to a specific value indicating that the detected size of the recording sheet is not in agreement with the recording sheet attribute indicated by the information contained in the printing request.

The image formation unit 150 is constituted to form an image which is generated by the image generating unit 130 and held by the image holding unit 14, on a recording sheet of the attribute contained in the printing request. The image formation unit 150 may be arranged so that, when the detected attribute of the supplied recording sheet is not in agreement with the recording sheet attribute indicated by the information contained in the printing request, the image formation unit 150 does not form an image on the recording sheet and ejects the recording sheet to the sheet output tray.

The control unit 190 controls the respective components of the image forming device 100 and carries out a job of image formation. When a request for starting a job of image formation is received by the communication unit 193, the control unit 190 requests the respective components of the image forming device 100 to execute the job of image formation based on the printing request corresponding to the job execution request received.

Specifically, the control unit 190 causes the image generating unit 130 to generate an image, and causes the image holding unit 140 to hold the generated image. Moreover, the control unit 190 causes the medium supplying source selecting unit 110 to select the second medium supplying unit 171 or the first medium supplying unit 160 in order to supply a recording sheet of the attribute in agreement with that contained in the printing request.

When a recording sheet is to be supplied from the first medium supplying unit 160, the control unit 190 causes the detection unit 120 to detect the size of the recording sheet actually supplied from the first medium supplying unit 160.

When the attribute of the recording sheet supplied to the image formation unit 150 is not in agreement with the recording sheet attribute indicated by the information contained in the printing request, the control unit 190 controls the image unit forming 150 so that the job of image formation to form the image on the recording sheet is not performed, and the control unit 190 causes the image holding unit 140 to hold the image.

The cases in which the attributes differ may include the case in which the size of the recording sheet differs from the recording sheet size indicated by the information contained in the printing request. When the kind of a recording sheet is detectable by the detection unit 120, the cases in which the attributes differ may include also the case in which the kind of a recording sheet differs from that indicated by the information contained in the printing request.

The screen generating unit 180 generates a screen to be displayed on a display unit (which is not illustrated) of the image forming device 100. For example, when the recording sheet attribute indicated by the information contained in the printing request differs from the attribute of the recording sheet supplied from the first medium supplying unit 160 to the image formation unit 150, the screen generating unit 180 generates a message display screen reporting that the attribute of the actually supplied recording sheet differs from the attribute indicated by the information contained in the printing request. In addition to the message display screen, the screen generating unit 180 may generate a stop request display screen requesting the operator to input a command for stopping the job of image formation started by the printing request.

The input unit 185 is constituted to input a request for starting a job of image formation to the image forming device 100. The input unit 185 includes a medium renewal input unit 186 and a medium attribute input unit 187. The medium renewal input unit 186 is constituted so that, when the attribute of a recording sheet supplied from the first medium supplying unit 160 to the image formation unit 150 is not in agreement with the information indicating the recording sheet attribute and contained in the printing request, the medium renewal input unit 186 enables the operator to input medium renewal information indicating that a new recording sheet is set in the first medium supplying unit 160.

For example, the medium attribute input unit 187 is constituted to input the attribute of a recording sheet which is set in the first medium supplying unit 160. The medium attribute input unit 187 may be arranged to input the attribute of a recording sheet, such as recording sheet size or kind of recording sheet. The medium attribute input unit 187 may be arranged to input the attribute of a recording sheet corresponding to each of the plurality of second medium supplying units 171.

The communication unit 193 is constituted to receive a printing request from the host computer 300 connected to the image forming device 100 via the network, and to transmit the information indicating the state of the image forming device 100 to the host computer 300.

The storage unit 195 may be constituted as a hard disk drive (HDD) unit and may be arranged to store mass data. Moreover, the storage unit 195 may be arranged to hold information indicating the attribute of a recording sheet which is supplied from each of the first medium supplying unit 160 and/or the second medium supplying units 171.

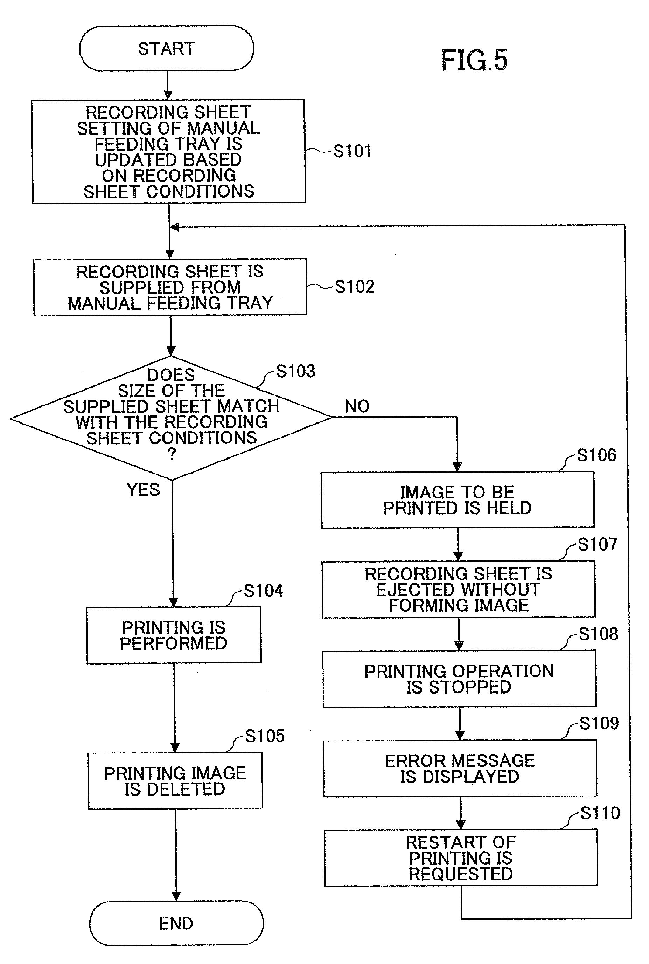

FIGs. 5 to 12 are diagrams for explaining the processing steps which cause a printing medium of an attribute corresponding to that of print data to be supplied from the manual feeding tray when the printing medium is not contained in the plurality of recording sheet cassettes.

In the examples of FIGs. 5 to 12, a printing medium sheet of an attribute corresponding to that of print data is supplied from the manual feeding tray when the printing medium is not contained in the plurality of recording sheet cassettes. Alternatively, the printing medium supplying method of the invention may be arranged so that, when the operation of supplying a printing medium from the manual feeding tray is selected by the request input from the operator but a printing medium of an attribute corresponding to that of print data is not supplied, the printing medium supplying method of the invention causes the printing medium to be ejected from the image forming device and causes the image holding unit to hold the generated data of the image.

FIGs. 5 to 8 are flowcharts for explaining the processing steps which cause a recording sheet to be supplied from a manual feeding tray at a predetermined timing. FIG. 5 is a flowchart for explaining the processing steps which cause a recording sheet to be supplied from a manual feeding tray at a predetermined timing.

In the flowchart of FIG. 5, in step S101, a recording sheet setting of the manual feeding tray is updated based on the recording sheet conditions contained in the print data. The recording sheet setting of the manual feeding tray is overwritten by the recording sheet conditions contained in the print data, and the operation of supplying a recording sheet from the manual feeding tray is selected by the medium supplying source selecting unit 110.

Progressing to step S102 following step S101, a recording sheet is supplied from the manual feeding tray to the image formation unit 150.

In this respect, the recording sheet conditions contained in the print data (which may be called simply "recording sheet conditions") may indicate a paper size specified by the user when inputting a printing request of print data. The recording sheet conditions contained in the print data may further indicate a document name, a sheet supplying tray (AUTO), a paper kind (plain paper or others), etc. as information items. The recording sheet setting of the manual feeding tray (which may be called simply "recording sheet setting") indicates a paper size for the manual feeding tray, which paper size is specified beforehand by the user during the initial setting of the image forming device.

Progressing to step S103 following step S102, the detection unit 120 detects a size of the supplied recording sheet, and the control unit 190 detects whether the detected size and the recording sheet size indicated by the recording sheet conditions contained in the print data are in agreement. When a match between the detected size and the recording sheet size indicated by the print data occurs, the control progresses to step S104. On the other hand, when a mismatch occurs, the control progresses to step S106.

In step S104 following step S103, the image formation unit 150 forms an image on the supplied recording sheet in accordance with the image data developed on the memory of the image holding unit 140 based on the print data.

Progressing to step S105 following step S104, the portion of the memory where the image data for printing the image in step S104 is stored is released and the printing image (the stored image data) is deleted under the control of the control unit 190. The information used for generating the image data of an image other than the image data of an image may be stored in the memory.

On the other hand, in step S106 following step S103, the control unit 190 causes the image data (printing image) developed on the memory to be held in the image holding unit 140. The holding of a printing image here does not mean storing of image data in the memory before performing a normal printing. The holding of a printing image in step S160 means that the image data is held in the memory of the image holding unit without deleting the printing image, because the recording sheet is ejected without forming an image on the recording sheet in the next step S107. In the case of a normal printing, after a printing image is formed on the recording sheet in step S104, the printed image is deleted in step S105.

Progressing to step S107 following step S106, the recording sheet is ejected from the image forming device, and the image formation unit 150 is not caused to perform image formation. This makes it possible to prevent occurrence of a fault of the image forming device, such as a paper jam, due to mismatch of recording sheet size.

Progressing to step S108 following step S107, the control unit 190 stops the job of image formation. At this time, the control unit 190 does not accept receiving other jobs including a new print job in addition to the stopping of the print job currently processed.

Progressing to step S109 following step S108, the screen generating unit 180 generates an error message display screen reporting that the size of the recording sheet supplied from the manual feeding tray is not in agreement with the recording sheet conditions contained in the print data, and displays the error message display screen on the display unit.

Progressing to step S110 following step S109, the control unit 190 requests the image formation unit 150 to restart the job of image formation at a predetermined timing. After the step S110 is performed, the control is returned to step S102 and the processing steps S102-S110 are repeated. Thus, recovery printing can be performed even when a recording sheet is supplied from the manual feeding tray.

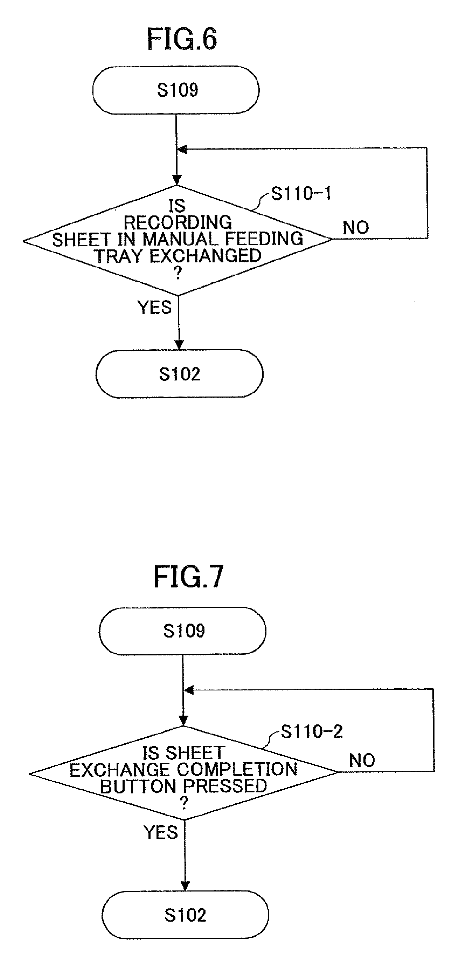

FIGs. 6 to 8 are flowcharts for explaining the processing steps which controls the timing the job of image formation is restarted. Each of the flowcharts of FIGs. 6 to 8 illustrates the details of step S110 in the flowchart of FIG. 5.

After the step S109 of FIG. 5 is performed, in step S110-1 of FIG. 6, the control unit 190 detects whether the recording sheet in the manual feeding tray is exchanged. When the recording sheet is exchanged, the control progresses to the step S102 of FIG. 5. When the recording sheet is not exchanged, the step S110-1 is repeated.

For example, the recording sheet in the manual feeding tray is exchanged by the operator in response to the error message display screen displayed in the step S109 of FIG. 5. Thereby, the sheet detection unit 161 (such as a sensor) contained in the manual feeding tray detects the exchange of the recording sheet, and notifies the detection result to the control unit 190. The control unit 190 requests the restarting of the job of image formation in response to the notice indicating that the recording sheet has been exchanged. This enables the recovery printing to be performed.

After the step S109 of FIG. 5 is performed, in step S110-2 of FIG. 7, the control unit 190 detects whether information indicating that the recording sheet of the manual feeding tray has been exchanged is input by the operator. Namely, when a sheet exchange completion button in the input unit is pressed by the operator, the control unit 190 detects that the information is input by the operator, and the control progresses to the step S102 of FIG. 5. When the sheet exchange completion button is not pressed by the operator, the step S110-2 is repeated. This sheet exchange completion button is equivalent to the medium renewal input unit 186 described above.

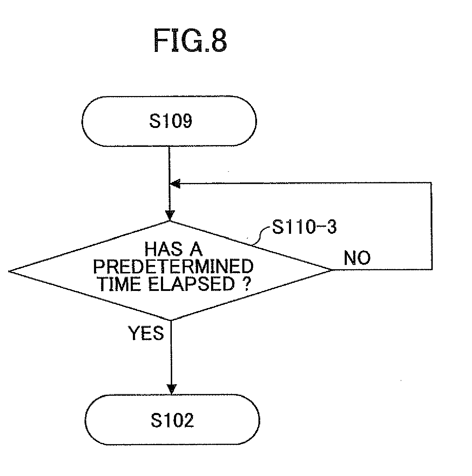

After the step S109 of FIG. 5 is performed, in step S110-3 of FIG. 8, the control unit 190 detects whether a predetermined time has elapsed after it is detected in the step S103 of FIG. 5 that the size of the recording sheet supplied from the manual feeding tray does not match with the recording sheet size indicated by the recording sheet conditions contained in the print data. When the predetermined time has elapsed, the control progresses to the step S102 of FIG. 5. When the predetermined time has not elapsed, the step S110-3 is repeated.

The timing that is used as the reference point for detecting whether the predetermined time has elapsed may be any of a time it is detected that the detected size of the recording sheet supplied does not match with the recording sheet size indicated by the print data, a time the job of image formation is stopped, a time the error message display screen is generated, and a time the error message display screen is displayed.

In the above-described embodiment, the job of image formation is restarted after the predetermined time has elapsed, and the operator is enabled to exchange the recording sheet in the manual feeding tray during the predetermined time. Once the recording sheet is exchanged, the job of image formation is automatically restarted even when any request is not input by the operator. It is no longer necessary for the operator to perform any operation from the end of the predetermined time to the time the job of image formation is restarted. The time and effort of the operator can be saved. The specific value of the predetermined time may be selected beforehand by a request input by the operator.

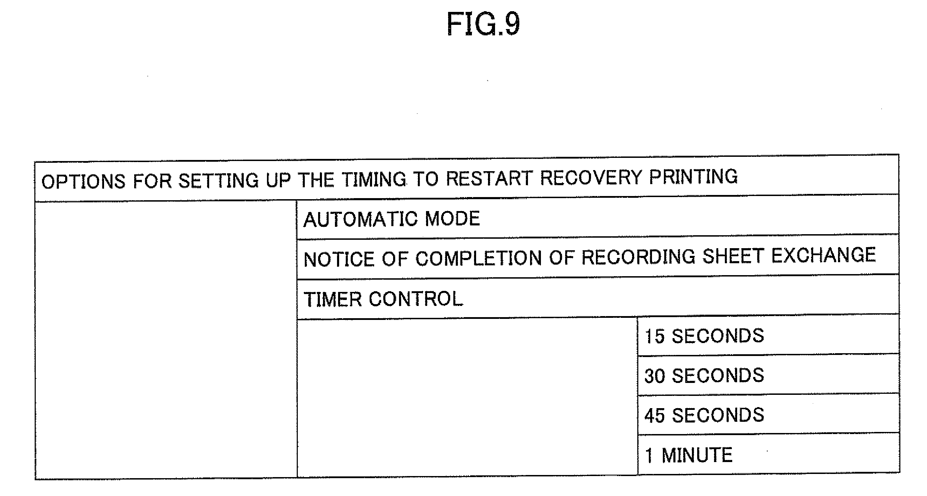

FIG. 9 shows an example of a menu which includes options for setting up the timing to restart the job of image formation.

In the menu of FIG. 9, the three methods described with FIG. 6, FIG. 7 and FIG. 8 are given as the options for setting up the job restart timing at which recovery printing is started. The option "automatic mode" is to start recovery printing when it is detected that the recording sheet of the manual feeding tray is exchanged. The option "notice of completion of recording sheet exchange" is to start recovery printing in response to the notice indicating the completion of recording sheet exchange which is input by the operator.

The option "timer control" is to start recovery printing when the predetermined time has elapsed after the time selected as the reference point. In the case of the timer control option, the predetermined time can be set up by selecting one of time constants. In the example of FIG. 9, one of four time constants ranging from "15 seconds" to "1 minute" can be chosen. Alternatively, an arbitrary time may be input as the predetermined time for the timer control.

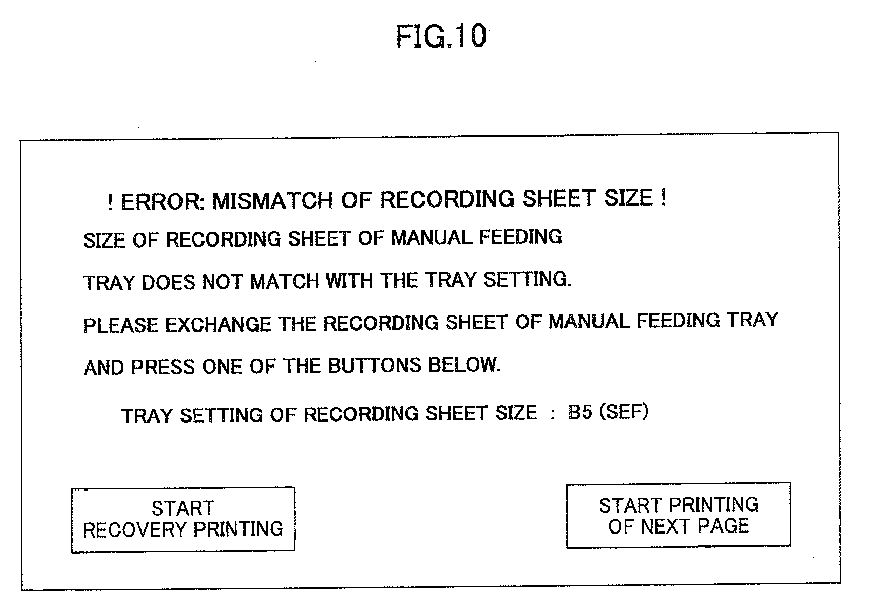

FIG. 10 shows an example of an error message display screen reporting that the size of the recording sheet detected by the detection unit is not in agreement with the recording sheet size indicated by the printing conditions contained in the print data.

On the error message display screen of FIG. 10, the error is notified to the operator as "mismatch of recording sheet size". The error message display screen of FIG. 10 further includes two buttons: "start recovery printing"; and "start printing of next page". When the operator presses the button "start recovery printing" after the operator sets the recording sheet of the correct size, the job of recovery printing is performed immediately. On the other hand, when the operator presses the button "start printing of next page", the job of image formation of the page which results in the error of recording sheet size is not performed, and the job of image formation of the next page is restarted.

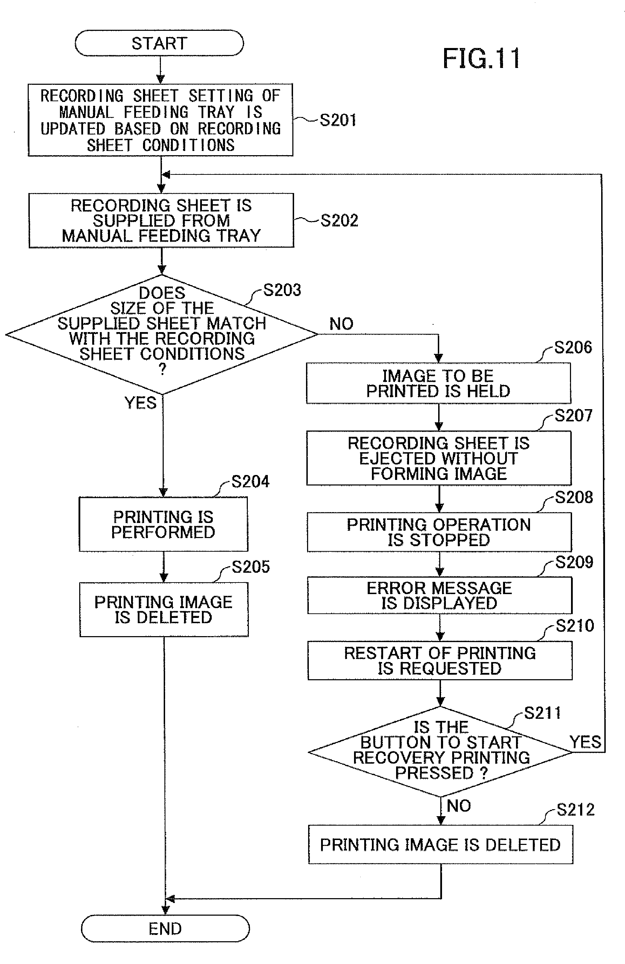

FIG. 11 is a flowchart explaining the processing steps which select, for every page, either the process in which recovery printing is performed or the process in which printing of the next page is performed without performing recovery printing, in response to the error message display screen of FIG. 10.

In the flowchart of FIG. 11, it is assumed that print data contains a plurality of pages and the recording sheet conditions contained in the print data indicate different recording sheet sizes for the plurality of pages. For example, the recording sheet conditions indicate mixed recording sheet sizes A3 and A4 for the plurality of pages. It is also assumed that the case in which the processing steps of FIG. 11 are started for the first page of the print data in which the recording sheet size is indicated by A3.

Steps S201 to S210 in the flowchart of FIG. 11 are the same as the steps S101 to S110 in the flowchart of FIG. 5, and a description thereof will be omitted.

In step S211 following step S210 of FIG. 11, the control unit 190 determines whether recovery printing should be performed. For example, this determination may be performed based on the operator's input to the error message display screen of FIG. 10.

When it is determined in step S211 that recovery printing should be performed, the control is returned to the step S202, and the steps S202 to S210 are repeated. On the other hand, when it is determined in step S211 that recovery printing should not be performed, the control progresses to step S212.

In step S212 following step S211, the control unit 190 deletes the printing image (the image data developed on the memory). After the step S212 is performed, the printing job of the current page is terminated. The job of printing of the next page will be performed by execution of the steps S201 to S212 of FIG. 11.

Specifically, in the above-mentioned case, the job of printing of the first page of A3 size is terminated (END), and the job of printing of the next page of A4 size will be performed by execution of the steps S201 to S212 of FIG. 11.

Next, an example in which the information indicating the size of a recording sheet previously supplied from the sheet feeding tray is held will be described.

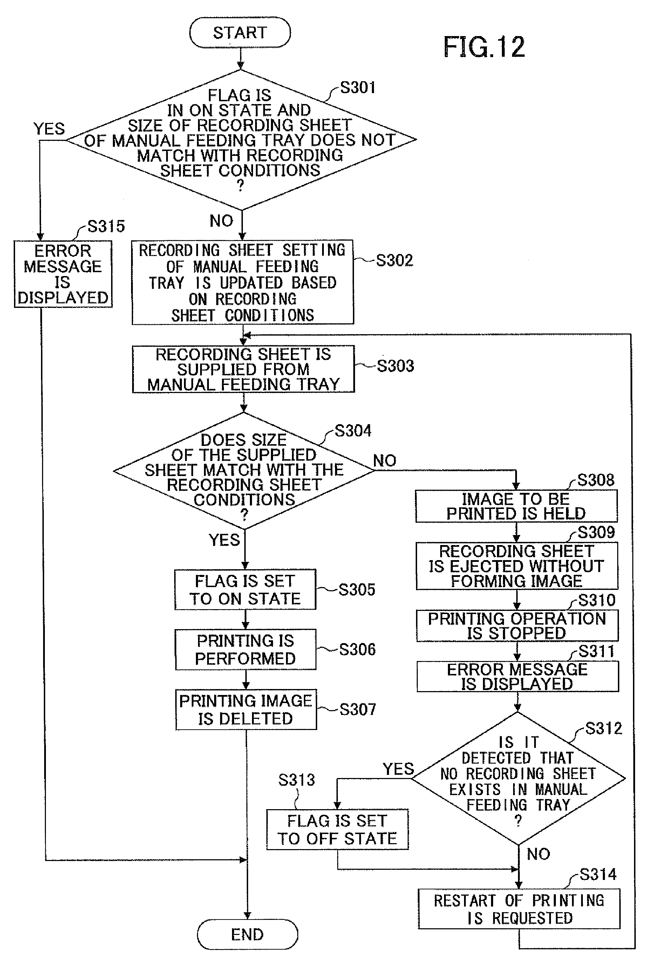

FIG. 12 is a flowchart explaining the processing steps which hold the information indicating an attribute (recording sheet size) of a recording sheet previously supplied from the manual feeding tray.

In the flowchart of FIG. 12, the size of a recording sheet supplied from the medium tray is detected and the detected size is held. Namely, once a recording sheet is previously supplied from the manual feeding tray, the size of the supplied recording sheet is detected by the detection unit 160 and thus the information indicating the size of the recording sheet actually set in the manual feeding tray is held. In this case, it is detectable, before a recording sheet is subsequently supplied from the manual feeding tray, whether the size of the recording sheet actually set in the manual feeding tray is in agreement with that indicated by the recording sheet conditions of the current page contained in the print data (assuming that the print data includes a plurality of pages). For example, when, at the time of printing of a following page, the size of the recording sheet actually set in the manual feeding tray is not in agreement with that indicated by the recording sheet conditions of the following page contained in the print data, the processing to overwrite the recording sheet setting of the manual feeding tray based on the recording sheet conditions contained in the print data and to supply the recording sheet from the manual feeding tray is not performed. Even if the recording sheet setting of the manual feeding tray is overwritten and the recording sheet is supplied, a mismatch of recording sheet size will occur.

In the following, when information indicating that the size of the recording sheet set in the manual feeding tray is previously acquired, a flag is set to an ON state.

In the flowchart of FIG. 12, it is determined in step S301 whether the flag, indicating whether the information indicating the size of the recording sheet actually set in the manual feeding tray is previously acquired, is set in the ON state. When the result of the determination is affirmative, it is further determined in step S301 whether the size of the recording sheet actually set in the manual feeding tray is in agreement with that indicated by the recording sheet conditions contained in the print data.

When the flag is in the ON state and the size of the recording sheet actually set in the manual feeding tray is not in agreement with that indicated by the recording sheet conditions contained in the print data, the control progresses to step S315 (error message). This step S315 is the same as the step S109 of FIG. 5, and a description thereof will be omitted.

Namely, when the size of the recording sheet actually set in the manual feeding tray and that indicated by the recording sheet conditions contained in the print data are not in agreement, the processing to overwrite the recording sheet setting of the manual feeding tray based on the recording sheet conditions contained in the print data and to supply the recording sheet from the manual feeding tray is not performed. Even if the recording sheet setting of the manual feeding tray is overwritten and the recording sheet is supplied, a mismatch of recording sheet size will occur. Thus, it is possible to avoid performing unnecessary processing.

Specifically, suppose that the information indicating the size of the recording sheet actually set in the manual feeding tray is A4 size. This information is acquired by the detection unit 160 (sensor) when the recording sheet is previously supplied from the manual feeding tray, and it is held. Moreover, suppose that the recording sheet size indicated by the recording sheet conditions of the next page contained in the print data is A3 size. In such a case, even if the recording sheet setting of the manual feeding tray is overwritten by A3 and the recording sheet is supplied from the manual feeding tray at the time of printing of the next page, a mismatch of recording sheet size occurs. The flowchart of FIG. 12 is arranged to avoid this.

On the other hand, when the conditions of the step S301 are not met (when the result of the determination in the step S301 is negative), the control progresses to step S302. In this case, the information indicating the size of the recording sheet previously supplied from the manual feeding tray is used, and it is determined whether the size of the recording sheet actually set in the manual feeding tray and that indicated by the recording sheet conditions contained in the print data are in agreement. This improves the accuracy of detection of a match of recording sheet size.

In step S302 following step S301, the recording sheet setting of the manual feeding tray is updated based on the recording sheet conditions contained in the print data for which the printing request is received. Thereby, the recording sheet setting of the manual feeding tray is in agreement with the recording sheet conditions contained in the print data, and the control unit 190 causes the medium supplying source selecting unit 110 to select the manual feeding tray so that the recording sheet may be supplied from the manual feeding tray.

Progressing to step S303 following step S302, a recording sheet is supplied from the manual feeding tray to the image formation unit 150.

Progressing to step S304 following step S303, the detection unit 120 detects a size of the supplied recording sheet, and the control unit 190 detects whether the detected size of the supplied recording sheet and the recording sheet size indicated by the recording sheet conditions contained in the print data are in agreement. Specifically, a size of the recording sheet actually supplied from the manual feeding tray (the width and length of the recording sheet) is detected by the sensor in the transporting route in the main body of the image forming device 100, and it is detected whether the detected size and the recording sheet size indicated by the recording sheet conditions contained in the print data are in agreement.

When the detected size of the supplied recording sheet and the recording sheet size indicated by the recording sheet conditions contained in the print data are in agreement, the control progresses to step S305. On the other hand, when they are not in agreement, the control progresses to step S308.

In step S305 following step S304, the control unit 190 sets the flag to the ON state, indicating that the information indicating the size of the recording sheet actually set in the manual feeding tray is acquired in step S304.

As mentioned above, in this embodiment, the flag is set to the ON state and the information indicating the size of the recording sheet set in the manual feeding tray is held. At the time of printing of a following page, the information indicating the size of the recording sheet set in the manual feeding tray is used, and it is detected whether the size of the recording sheet set in the manual feeding tray and that indicated by the recording sheet conditions contained in the print data are in agreement. This improves the accuracy of detection of a match of recording sheet size.

Steps S306 and S307 following step S305 are the same as the steps S104 and S105 of FIG. 5, and a description thereof will be omitted.

Moreover, steps S308 S311 following step S304 are the same as the steps S106 to S109 of FIG. 5, and a description thereof will be omitted.

Progressing to step S312 following step S311, the control unit 190 determines whether the sheet detection unit 161 included in the manual feeding tray detects the paper-out state in which no recording sheet exists in the manual feeding tray.

When the paper-out state of the manual feeding tray is detected, the control progresses to step S313. When the paper-out state of the manual feeding tray is not detected, the control progresses to step S314.

In step S313 following step S312, the control unit 190 sets the flag in an OFF state, indicating that the information indicating the size of the recording sheet actually set in the manual feeding tray is no longer acquired, because the manual feeding tray runs out of a recording sheet.

Progressing to step S314 following step S313 or step S312, the control unit 190 requests the image formation unit 150 to restart the job of image formation at a predetermined timing. After the step S314 is performed, the control is returned to the step S303 and the steps S303 to S314 are repeated. Thus, recovery printing can be performed even when a recording sheet is supplied from the manual feeding tray. The control of the predetermined timing may be performed by using any of the processing steps shown in FIGs. 6 to 8.

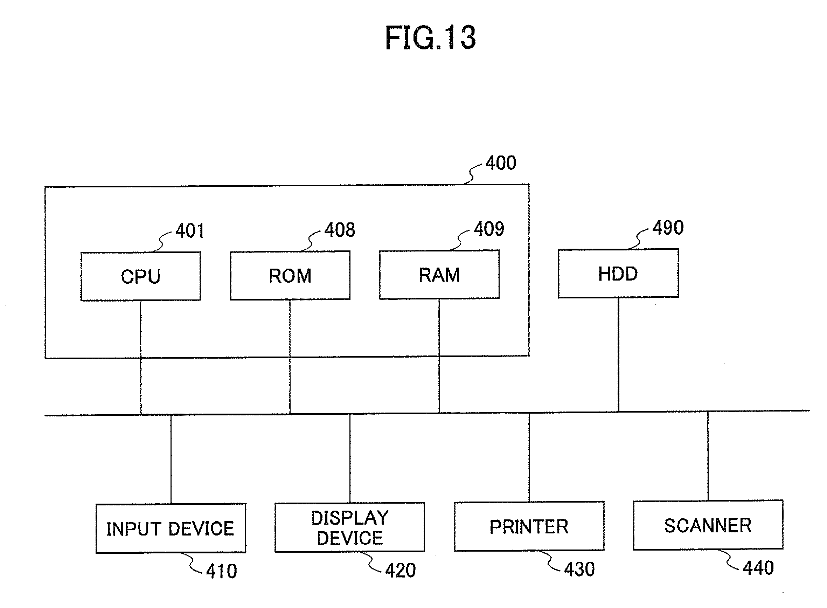

FIG. 13 shows the composition of a computer of an image forming device which is arranged to perform a printing medium supplying method of an embodiment of the invention by executing a computer-readable program stored in a computer-readable recording medium of the image forming device.

As shown in FIG. 13, the computer includes a main controller 400, an input device 410, a display device 420, a printer 430, a scanner 440, and a HDD 490. The main controller 400 is a main control unit which carries out the functions of the image forming device. This main controller 400 includes a CPU 401, a ROM 408, and a RAM 409.

The CPU 401 reads the computer-readable program of this embodiment from the ROM 408, develops the program to the RAM 409, and executes the program in the RAM 409. The ROM 408 is a nonvolatile memory, and the ROM 408 stores the computer-readable program that is executed by the CPU 401, and stores the parameters required for controlling the image forming device. The RAM 409 is a work memory that is used during the processing of the CPU 401.

The input device 410 is, for example, a keyboard or a mouse that is used when an operator inputs instructions to the computer. The display device 420 displays an operating state of the computer. The printer 430 is an output device that forms an image on a recording sheet and outputs the recording sheet with the image. The scanner 440 is a reading device that reads optically an image formed on a recording sheet. The HDD 490 stores the mass data including image data and others.

The computer-readable program of this embodiment is stored in the HDD 490 or the ROM 408. Otherwise the computer-readable program of this embodiment may be stored in a recording medium that can be set in a drive device of the image forming device which is not illustrated.

## Claims

1. An image forming device comprising:
a detection unit to detect a size of a printing medium supplied from a first medium supplying unit;
an image generating unit to generate data of an image to be formed on the printing medium, in response to a printing request;
an image formation unit to form an image on the printing medium based on the data of the image generated by the image generating unit;
an image holding unit to hold the data of the image; and
a control unit to control the image forming device to perform a job of image formation;
wherein the control unit is arranged so that, when the size of the printing medium detected by the detection unit is not in agreement with a printing medium size indicated by information contained in the printing request, the control unit causes the printing medium to be ejected from the image forming device without causing the image formation unit to form an image on the printing medium, and causes the image holding unit to hold the data of the image.

2. The image forming device according to claim 1, wherein the control unit is arranged to delete the data of the image held by the image holding unit, after the image is formed on the printing medium by the image formation unit.

3. The image forming device according to claim 1 or 2, further comprising a medium supplying source selecting unit to select, in response to the printing request, one of a plurality of second medium supplying units that supplies a printing medium of an attribute indicated by information contained in the printing request, and to cause the selected second medium supplying unit to supply the printing medium,
wherein the medium supplying source selecting unit is arranged so that, when all of the plurality of second medium supplying units are not to supply a printing medium of the attribute indicated by the information contained in the printing request, the medium supplying source selecting unit selects the first medium supplying unit and causes a printing medium to be supplied from the first medium supplying unit.

4. The image forming device according to any one of claims 1 to 3, wherein the control unit is arranged so that, when the size of the printing medium detected by the detection unit is not in agreement with the printing medium size indicated by the information contained in the printing request and a new printing medium is set in the first medium supplying unit, the control unit starts the job of image formation to form an image on the new printing medium.

5. The image forming device according to any one of claims 1 to 3, wherein the control unit is arranged so that, when the size of the printing medium detected by the detection unit is not in agreement with the printing medium size indicated by the information contained in the printing request and a predetermined time has elapsed after the printing medium is ejected without causing the image formation unit to form an image on the printing medium, the control unit starts the job of image formation to form an image on a printing medium.

6. The image forming device according to any one of claims 1 to 3, further comprising an input unit to input medium renewal information indicating that a new printing medium is set in the first medium supplying unit,
wherein the control unit is arranged so that, when the size of the printing medium detected by the detection unit is not in agreement with the printing medium size indicated by the information contained in the printing request and the medium renewal information is input by the input unit, the control unit starts the job of image formation to form an image on the new printing medium.

7. The image forming device according to any one of claims 1 to 3, further comprising a screen generating unit to generate a message display screen reporting that the detected size of the printing medium is not in agreement with the printing medium size indicated by the printing request, when the size of the printing medium detected by the detection unit is not in agreement with the printing medium size indicated by the information contained in the printing request.

8. The image forming device according to claim 7, wherein the screen generating unit is arranged to generate a stop request display screen requesting an operator to input a command for stopping the job of image formation started by the printing request, when the size of the printing medium detected by the detection unit is not in agreement with the printing medium size indicated by the information contained in the printing request.

9. The image forming device according to any one of claims 1 to 3, wherein the first medium supplying unit comprises a width detection unit to detect a width of a printing medium set in the first medium supplying unit, and
wherein, when the detected width of the printing medium set in the first medium supplying unit is in agreement with the printing medium size indicated by the information contained in the printing request, the control unit starts the job of image formation to form an image on the printing medium.

10. The image forming device according to any one of claims 1 to 3, further comprising a medium attribute input unit to input an attribute of a printing medium that is set in the first medium supplying unit,
wherein the control unit is arranged so that, when the printing medium attribute input by the medium attribute input unit is in agreement with the printing medium attribute indicated by the information contained in the printing request, the control unit starts the job of image formation to form an image on the printing medium.

11. The image forming device according to any one of claims 1 to 10, further comprising an information holding unit to hold medium size flag information indicating whether the size of the printing medium detected by the detection unit is in agreement with the printing medium size indicated by the information contained in the printing request.

12. A printing medium supplying method for use in an image forming device, comprising:
detecting a size of a printing medium supplied from a first medium supplying unit;
generating data of an image to be formed on the printing medium, in response to a printing request;
holding the data of the image in an image holding unit;
forming an image on the printing medium based on the data of the image; and
controlling the image forming device to perform a job of image formation;
wherein the controlling the image forming device is arranged so that, when the detected size of the printing medium is not in agreement with a printing medium size indicated by information contained in the printing request, the printing medium is ejected from the image forming device without forming an image on the printing medium, and the data of the image is held in the image holding unit.

13. The printing medium supplying method according to claim 12, further comprising deleting the data of the image held in the image holding unit, after the image is formed on the printing medium.

14. The printing medium supplying method according to claim 12 or 13, further comprising selecting, in response to the printing request, one of a plurality of second medium supplying units that supplies a printing medium of an attribute indicated by information contained in the printing request, to cause the selected second medium supplying unit to supply the printing medium,
wherein the selecting is arranged so that, when all of the plurality of second medium supplying units are not to supply a printing medium of the attribute indicated by the information contained in the printing request, the first medium supplying unit is selected to cause a printing medium to be supplied from the first medium supplying unit.

15. A computer-readable recording medium storing a program which, when executed by a computer, causes the computer to perform the printing medium supplying method according to any one of claims 12 to 14.
